(19) Europäisches Patentamt
European Patent Office
Office européen des brevets

(11) **EP 4 220 147 A1**

(12) **EUROPEAN PATENT APPLICATION**

(43) Date of publication:
**02.08.2023 Bulletin 2023/31**

(21) Application number: **22382080.4**

(22) Date of filing: **31.01.2022**

(51) International Patent Classification (IPC):
**G01N 29/02** $^{(2006.01)}$  **G01N 29/036** $^{(2006.01)}$

(52) Cooperative Patent Classification (CPC):
**G01N 29/022; G01N 29/036;** G01N 2291/0256

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Consejo Superior de Investigaciones Científicas
(CSIC)
28006 Madrid (ES)**

(72) Inventors:
• **Sanz Jiménez, Adrián**
  **Madrid (ES)**
• **Ruz Martínez, José Jaime**
  **Madrid (ES)**
• **Gil Santos, Eduardo**
  **Madrid (ES)**
• **Malvar Vidal, Oscar**
  **Madrid (ES)**
• **Tamayo de Miguel, Javier**
  **Madrid (ES)**
• **Calleja Gómez, Montserrat**
  **Madrid (ES)**

(74) Representative: **Pons
Glorieta Rubén Darío 4
28010 Madrid (ES)**

(54) **MECHANICAL RESONATOR WITH LOW LEVEL OF SYMMETRY FOR THE MEASUREMENT OF THE MASS OF INDIVIDUAL PARTICLES**

(57)   A mechanical resonator with low level of symmetry for the measurement of the mechanical properties of individual particles that comprises: a resonator element (1) made of an elastic material and adapted for sustaining at least one oscillation mode, and a clamping structure (2) supporting the resonator element (1). Additionally, all edges of the resonator element (1) are anchored to the clamping structure (2), the thickness of the resonator element is much smaller than its length and width, such as a membrane, its mechanical symmetry is N≤2, and its aspect ratio comprised between $1+10^*m_a/M$ and 100, where $m_a$ is the mass of an analyte whose mass is to be measured and M is the mass of the resonator element (1) used to measure it.

**FIG. 1**

**Description**

**OBJECT OF THE INVENTION**

A mechanical resonator for the measurement of the mass of individual particles with low level of symmetry to avoid effects of modes degeneration.

**BACKGROUND OF THE INVENTION**

Nanomechanical resonators are playing a fundamental role for the development of new techniques and new technologies for very different applications, ranging from quantum measurements to chemical or biological sensing. In the last decades, nanomechanical resonators have been widely used for mass sensing due to their extremely high sensitivity giving rise to a new type of mass spectrometry named nanomechanical mass spectrometry that has proven to be extremely useful for the mass measurement of macrobiological entities such as proteins, viruses and bacteria, where conventional mass spectrometers really struggle due to the high uncertainty in the mass to charge ratio of such massive particles. Furthermore, nanomechanical mass spectrometry does not require the fragmentation or ionization of the sample and can identify the biological entity with its intact conformation, just by measuring mechanical properties such as the mass or the stiffness of the particle.

The principle of work of nanomechanical mass spectrometry is that the resonance frequencies of the resonator are altered when an analyte is adsorbed on the resonator's surface. According to Hooke's law, the vibrational resonance frequency of the resonator is inversely proportional to the squared root of its mass. The adsorption of an analyte will cause an increment of the total mass, therefore producing a downshift in frequency. The measurement of these frequency changes allows to obtain a value of the mass of the analyte by mean of the following fundamental equation that relates the relative frequency shift with the mass of the adsorbed analyte:

$$\frac{\Delta f}{f_0} = -\frac{1}{2}\frac{m_a}{M}\psi(X_0, Y_0)^2 \qquad (1)$$

Where M is the mass of the resonator, $m_a$ is the mass of the analyte, $X_0$ and $Y_0$ are the normalized coordinates of the position of the analyte on the resonator's surface and $\psi$ represents the mode shape associated to the vibration frequency $f$.

Resonators and resonance frequency measurement methods have been improved since the invention of nanomechanical mass spectrometry, with the aim of measuring different types of analytes, such as proteins, viruses or bacteria, and increasing their capture efficiency. Nanomechanical resonators can be even designed to measure not only the mass but other mechanical properties like the stiffness or even the shape of the analytes. These advances have required a great deal of work on different micro- and nanofabrication techniques, thus entailing a high cost.

One of the most challenging aspects of nanomechanical mass spectrometry is the capture efficiency, to deliver the particles from the original sample (that can be a liquid sample, a surface or simply the air in a room) to the sensor, or in other words, to the surface of the resonator.

In order to improve capture efficiency, enormous efforts have been made to focus the particle beam on the smallest cross section possible. This is a really difficult task for such big masses because it must be done based on aerodynamic principles, not electromagnetic, because the electromagnetic fields necessary to move these kinds of particles at the velocities that they travel through the system would be extremely high and unpractical.

Increasing the area of capture of the resonator also helps to improve capture efficiency. This can be done in two ways, using arrays of resonators working together or basically optimizing the shape of the resonator. The first one is a good solution but requires extremely complex fabrication processes and readout mechanisms not easy to implement. The problem with the second one is that increasing the area of the resonator also decreases the sensitivity, so at the end it must be a compromise between capture efficiency and sensitivity. For this purpose, the optimum shape of the resonator is a plate as thin as possible with as much area as possible, which can be achieved with an aspect ratio as close to one as possible. A common choice is to use simple geometrical forms such as circles, squares or rectangles.

These geometries support different types of modes of vibration depending on the boundary conditions, each one associated to its particular resonance frequency. Note from equation (1) that, in order to calculate the mass of the particle, it is necessary to accurately know the adsorption position and the mode shape associated to the frequency that is being measured. Consequently, during a measurement, the mode shape should not change and if it does, we should know exactly how it changes. If the adsorption position is unknown, which is the most common case, several resonance frequencies must be measured simultaneously in order to mathematically calculate the adsorption position.

The not changing condition of the mode shapes is usually taken for granted in most of the cases because it is well satisfied for structures like cantilevers or double-clamped beams, two of the most popular geometries that are used for sensing applications. However, best geometries to improve capture efficiency are those with an aspect ratio as close to one as possible, cantilevers or double-clamped beams are not the best choices for good capture efficiency.

The problem with a geometry that has aspect ratio close to one is that it usually possesses quasi-degenerated modes, i.e., two different modes that vibrate at very close frequencies. These modes are extremely unstable and just a tiny perturbation like the adsorption of a small particle can make them change drastically. These changes of the vibration modes shape produce effects on the resonance frequencies that are not considered by equation (1) no longer being possible to apply them to obtain the mass and position of the adsorbed particle.

It is then fundamental to find a compromise in the aspect ratio such that the capture efficiency is as high as possible and at the same time degeneration effects are negligible for the correct calculation of the mass and position of the particle.

## DESCRIPTION OF THE INVENTION

The present invention describes a mechanical resonator with low level of symmetry, for the accurate measurement of the mass or other mechanical properties of individual particles. The resonator has a wide dynamic range, being able to determine the mass of bacteria, viruses, nanoparticles, etc., very precisely.

As explained before, when mechanical resonators have a geometry that has aspect ratio close to one they possess quasi-degenerated modes. The mechanical symmetry of the structure plays a fundamental role in the existence of quasi-degenerated modes. The mechanical symmetry can be described by an integer N, calculated from the minimum rotation angle $\phi$ around an axis perpendicular to the sensing area, which gives rise to an analogous mechanical structure, such as N=360/$\phi$. Thus, for a rectangle N=2, for an equilateral triangle N=3, for a square N=4 and so on. The most extreme case is of course a disk, which has symmetry of $N = \infty$, i.e., any rotation takes the system to the exact same configuration. Structures with level of symmetry N>2 support degenerated modes and therefore are not the best choice. If the level of symmetry is N≤2, degenerate modes are no longer supported, but quasi-degenerated modes can exist if the aspect ratio is close to 1.

In order to avoid quasi-degenerated modes, the present invention introduces a mechanical resonator with a level of mechanical symmetry of N≤2.

In the invention, an alternative to the mechanical resonators employed so far is presented, exploiting the fact that structures with mechanical symmetry N≤2 do not possess degenerate vibrational modes. The dynamic range of the mechanical resonator is as high as that of previous nanomechanical mass spectrometric works and allows an accuracy in the measurement of mechanical properties equal to or higher than that of the latter. In addition, the analyte capture efficiency of the present mechanical resonator is higher than that of previous works and does not require complex manufacturing processes.

Specifically, the resonators of the invention are mechanical resonators that can be applied to mass spectrometry of micro- and nano-entities, which comprise a resonator element made of an elastic material adapted for sustaining at least one oscillation mode, and a clamping structure supporting the resonator element.

Additionally, the mechanical resonator meets the following conditions:

- all edges of the resonator element are anchored to the clamping structure,
- the thickness of the resonator element is much smaller than its length and width, such as a membrane, which means membranes having a thickness less than or equal to 0.1 times the length of the shorter side of the membrane,
- its mechanical symmetry is N≤2, such as an ellipse or a rectangle, and
- aspect ratio greater than $1+10*m_a/M$, preferably comprised between $1+10*m_a/M$ and 100 (preferably the smallest value in order to maximize capture efficiency), where $m_a$ is the mass of an analyte whose mass is to be measured and M is the mass of the resonator element used to measure it.

Using resonator elements with aspect ratio comprised between $1+10*m_\alpha/M$ and 100 for nanomechanical spectrometry the error coming from quasi-degeneration will not exceed 10%.

The condition for the aspect ratio is expressed as a function of the mass of the analyte intended to be deposited on the resonator and the mass of the resonator element itself. This is because the change in the shape of the quasi-degenerated vibrational modes depends on the ratio between these two quantities.

It should be noted that the mechanical resonator presented in this invention is of great interest for nanomechanical spectrometry not only because of the above mentioned, but also because their geometry causes the frequencies of their vibration modes to be concentrated in a reduced frequency range that will be smaller as the aspect ratio is closer to 1. This is a great advantage for the simultaneous measurement of the frequency of a large number of vibration modes, which increases the accuracy of analyte mass measurement.

In the following lines, the effect of particle adsorption on the quasi-degenerated modes of a semi-square membrane are described using a novel theoretical model. The aim of this part is to demonstrate mathematically all the concepts exposed above as well as to bring more insight on the effects of quasi-degeneration on a mechanical resonator used for mass spectrometry.

Consider a resonator element in the shape of a rectangular membrane of length $L_x$, width $L_y$ and thickness $h$, that is centered at the origin of the coordinate system and has its four boundaries clamped to the clamping structure.

We define the aspect ratio of the membrane as $AR = \frac{L_x}{L_y} \geq 1$.

The out-of-plane vibrations will be determined by the balance between the kinetic and potential energies of the membrane. The kinetic energy can be expressed as a function of the vertical displacement w as follows:

$$T = \frac{1}{2}\rho h L_x{}^2 \int_{-1/(2AR)}^{1/(2AR)} \int_{-1/2}^{1/2} \left(\frac{\partial w(X,Y,t)}{\partial t}\right)^2 dXdY \qquad (2)$$

Where $X = x/L_x$ and $Y = y/L_x$ are the coordinates normalized to the length of the membrane and $\rho$ is the membrane density.

The potential energy can be split into two different contributions. On one side, the energy due to the bending of the membrane, which is proportional to $h^3$ and on the other side, the energy due to the stress $\sigma$ inside the membrane due to the fabrication process, which is proportional to $h$. This stress can be released when the structure has free edges, like cantilever plates for instance. For these cases, this part of the potential energy can be neglected.

In the case of a membrane with all its edges clamped, the stress cannot be released, and because the membranes are usually very thin, the energy due to the stress is much greater than the energy due to bending to the point that it is the bending energy the one that can be neglected. In this demonstration it is assumed that the case is the latter, but the concept can be extended to the general case of bending and stress without any loss of generality. The potential energy of a stressed membrane can be expressed as:

$$U = \frac{1}{2}\sigma h \int_{-1/(2AR)}^{1/(2AR)} \int_{-1/2}^{1/2} \left(\left(\frac{\partial w(X,Y,t)}{\partial X}\right)^2 + \left(\frac{\partial w(X,Y,t)}{\partial Y}\right)^2\right) dXdY \qquad (3)$$

Using equations (2) and (3) the Lagrangian of the system can be formed and the Euler-Lagrange equations can be applied to obtain the equation of motion for the vertical displacement of the membrane. Assuming harmonic motion with angular frequency $\omega$, the final differential equation can be expressed as:

$$\lambda^2 w(X,Y) + \frac{\partial^2 w(X,Y)}{\partial X^2} + \frac{\partial^2 w(X,Y)}{\partial Y^2} = 0 \qquad (4)$$

where $\lambda = \omega L_x \sqrt{\frac{\rho}{\sigma}}$.

Assuming that the vertical displacement $w(X, Y)$ must be zero along the four edges of the membrane, equation (4) has infinite solutions that can be represented with a couple of natural numbers $(m, n)$ and that can be expressed as $w_{m,n}(X,Y) = A\psi_{m,n}(X,Y)$, where $A$ is an arbitrary amplitude and $\psi_{m,n}(X,Y)$ is the dimensionless mode shape that is given by:

$$\psi_{m,n}(X,Y) = 2\sin\left(m\pi\left(X - \frac{1}{2}\right)\right)\sin\left(n\pi\left(YAR - \frac{1}{2}\right)\right) \qquad (5)$$

Of course, for satisfaction of equation (4), the parameter $\lambda$ is not free and will take different values depending on the values of m and $n$. Thus, for convenience, we will rename the parameter $\lambda$ to $\lambda_{m,n}$ and it can be expressed as,

$$\lambda_{m,n} = \pi\sqrt{m^2 + AR^2 n^2} \qquad (6)$$

The eigenfrequencies are finally given by:

$$f_{m,n} = \frac{\sqrt{m^2 + AR^2 n^2}}{2L_x} \sqrt{\frac{\sigma}{\rho}} \qquad (7)$$

Let us now introduce the concept of degeneration. Two or more vibration modes are called degenerated when they have the same frequency. This means that none of them is energetically more favorable than the others. In this case, the mode of vibration can be any linear combination of all the original modes that are degenerated. When two or more modes are degenerated, they are extremely sensitive to small changes because, depending on the perturbation, the degeneration can be broken, and one particular linear combination of the modes will be more energetically favorable than the rest.

In practice, due to small fabrication defects, there is always a particular linear combination that is more energetically favorable. However, even if the frequencies are not exactly the same due to small fabrication defects, a small perturbation can still cause big changes if the energy involve is of the order of the energy difference between the modes. This is the case of quasi-degeneration.

One of the clearest cases of modes degeneration is the couple $f_{m,n}$ and $f_{n,m}$ when the aspect ratio of the membrane is close to 1. As mentioned above, the mode of vibration can be any linear combination of the two original modes and therefore the vertical displacement can be expressed as:

$$W_{m,n}(X,Y) = A_i \psi_i(X,Y) \qquad (8)$$

Where the index i can take values 1 and 2, $A_i$ are arbitrary amplitudes, $\psi_1(X,Y) = \psi_{m,n}(X,Y)$ and $\psi_2(X,Y) = \psi_{n,m}(X,Y)$, and the Einstein's notation of repeated indices is being used. The kinetic and potential energies of the membrane can be expressed as:

$$T = \frac{\omega^2 M}{2} A_i A_j \delta_{ij} \qquad (9)$$

$$U = \frac{h\sigma}{2AR} A_i A_j \Lambda_{ij} \qquad (10)$$

Where $\delta_{ij}$ is the Kronecker delta, $\Lambda = \begin{bmatrix} \lambda_{m,n}^2 & 0 \\ 0 & \lambda_{n,m}^2 \end{bmatrix}$ and M is the total mass of the membrane. Applying the Rayleigh-Ritz principle, the total kinetic energy must be equal to the total potential energy, giving as a result the equation for the system:

$$\left( \omega^2 M \delta_{ij} - \frac{h\sigma}{AR} \Lambda_{ij} \right) A_i A_j = 0 \qquad (11)$$

The system of equations (11) is homogeneous, therefore the only way to find a solution different than the trivial solution is that the determinant of the system is zero:

$$\left| \omega^2 \mathbf{M} - \frac{h\sigma}{AR} \Lambda \right| = 0 \qquad (12)$$

Where M = MI represents the mass matrix, being I the unity matrix. There are two different solutions for equation (12) which are basically $f_{m,n}$ and $f_{n,m}$ given by equation (7).

Two different scenarios can be distinguished. If $AR \neq 1$, for $\omega = 2\pi f_{m,n}$, equation (11) is satisfied for any value of $A_1$ but only if $A_2 = 0$. Similarly, for $\omega = 2\pi f_{n,m}$, equation (11) is satisfied for any value of $A_2$ but only if $A_1 = 0$, there is no degeneration. However, if $AR = 1$, equation (11) is satisfied for any pair of values of $A_1$ and $A_2$ and this is basically pure degeneration.

Let us now analyze the effect that particle adsorption produces on these modes. Let assume that there are $N$

particles adsorbed on the membrane surface at *N* different positions. The kinetic energy of these particles can be expressed as:

$$T_a = \frac{\omega^2}{2} A_i A_j \Delta M_{ij} \qquad (13)$$

Where $\Delta M_{ij}$ represents the added mass matrix that is given by,

$$\Delta M = \begin{bmatrix} \sum_{i=1}^N m_a^{(i)} \psi_{m,n}\left(X_0^{(i)}, Y_0^{(i)}\right)^2 & \sum_{i=1}^N m_a^{(i)} \psi_{m,n}\left(X_0^{(i)}, Y_0^{(i)}\right)\psi_{n,m}\left(X_0^{(i)}, Y_0^{(i)}\right) \\ \sum_{i=1}^N m_a^{(i)} \psi_{m,n}\left(X_0^{(i)}, Y_0^{(i)}\right)\psi_{n,m}\left(X_0^{(i)}, Y_0^{(i)}\right) & \sum_{i=1}^N m_a^{(i)} \psi_{n,m}\left(X_0^{(i)}, Y_0^{(i)}\right)^2 \end{bmatrix} \qquad (14)$$

Where $m_a^{(i)}$ and $\left(X_0^{(i)}, Y_0^{(i)}\right)$ are the mass and adsorption position of the *ith* particle respectively. Assuming that the potential energy is not altered, the new system of equations can be expressed as:

$$\left(\omega^2\left(M\delta_{ij} + \Delta M_{ij}\right) - \frac{h\sigma}{AR}\Lambda_{ij}\right) A_i A_j = 0 \qquad (15)$$

And the equation for the eigenfrequencies now becomes:

$$\left|\omega^2(\mathbf{M} + \Delta \mathbf{M}) - \frac{h\sigma}{AR}\Lambda\right| = 0 \qquad (16)$$

Now, equation (7) is no longer a solution of equation (16). Instead, the new eigenfrequencies are given by the following expression:

$$f_\pm = \frac{1}{2\pi} \left(\frac{h\sigma|\Lambda|Tr\left(\Lambda^{-1}(\mathbf{M}+\Delta \mathbf{M})\right)}{2AR|\mathbf{M}+\Delta \mathbf{M}|} \left(1 \pm \sqrt{1 - \frac{4|\mathbf{M}+\Delta \mathbf{M}|}{|\Lambda|Tr\left(\Lambda^{-1}(\mathbf{M}+\Delta \mathbf{M})\right)^2}}\right)\right)^{1/2} \qquad (17)$$

Where *Tr* represents the trace. The mode shapes associated to these eigenfrequencies can be found calculating the ratio between $A_1$ and $A_2$. This ratio can be easily calculated using equation (15) and (16) and is given by,

$$\left(\frac{A_2}{A_1}\right)_\pm = -\frac{\omega_\pm{}^2 \Delta M_{12}}{\omega_\pm{}^2(M+\Delta M_{22}) - \frac{h\sigma}{AR}\Lambda_{22}} = -\frac{\omega_\pm{}^2(M+\Delta M_{11}) - \frac{h\sigma}{AR}\Lambda_{11}}{\omega_\pm{}^2 \Delta M_{12}} \qquad (18)$$

The two eigenmodes associated to the eigenfrequencies (17) can then be written for convenience as a function of only one parameter $\theta$ so that $\tan \theta = \frac{A_2}{A_1}$ :

$$\psi_\pm(X, Y) = \cos\theta_\pm \psi_{m,n}(X, Y) + \sin\theta_\pm \psi_{n,m}(X, Y) \qquad (19)$$

Equation (19) shows how the eigenmodes change when small particles are adsorbed on the membrane surface. This change depends on the mass and position of the adsorbed particles and increases as the aspect ratio is closer to 1.

It is well known that, for a not degenerate vibration mode, the relative shift in frequency caused by the adsorption of a small particle is given by equation (1) where the mode shape $\psi$ does not change after adsorption. However, for quasi-degenerated modes, equation (1) is not valid anymore and the mode shape changes due to the adsorption. The more is the change on the mode shape, the less accurate equation (1) will be to describe the relative frequency shift.

In order to accurately calculate the change in frequency, equation (17) must be used instead. Importantly, when multiple particles are sequentially adsorbed, in order to calculate the relative frequency shift due to the next particle, the vibration mode shape just before the adsorption must be known.

As the aspect ratio increases from 1, the distance between the two frequencies becomes larger and the change of the mode shapes after the adsorption will be smaller, finally being negligible where equation (1) can be safely applied.

## DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

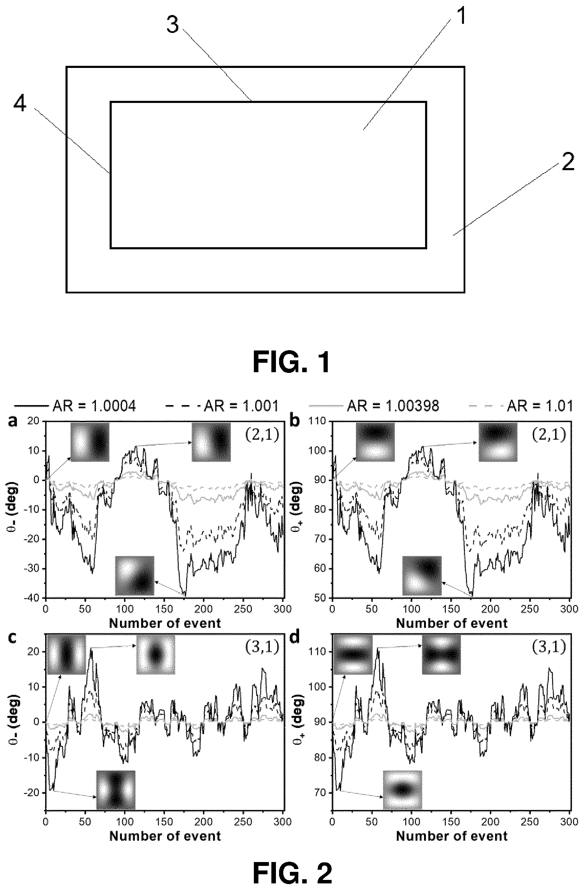

Figure 1.- Shows a simplified scheme of the mechanical resonator. The resonator element (1), the clamping structure (2), the long characteristic dimension (3) and the short characteristic dimension (4).

Figure 2.- Shows values of the parameter $\theta$, that is directly related with the change in the mode shape, during a virtual experiment of 300 randomly distributed adsorptions of E. *coli* bacteria on a semi-square silicon nitride resonator element for different aspect ratios of the resonator element for the degenerate modes $(m, n)$ = (2,1) and $(m, n)$ = (3,1). Insets show the state of the mode shape in a particular moment of the virtual experiment.

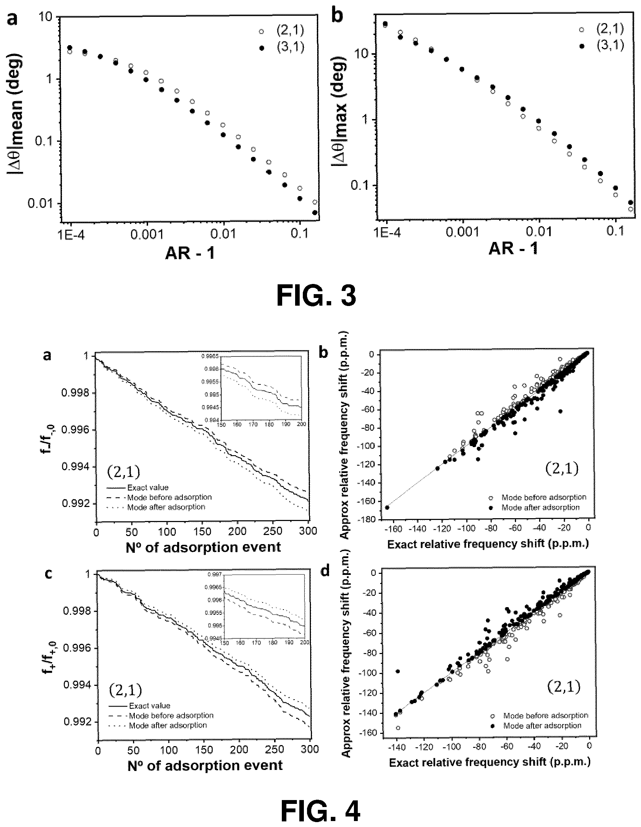

Figure 3.- Shows a) Averaged and b) maximum change of $\theta$ per single adsorption as a function of the aspect ratio of the resonator element for the vibration modes $(m, n)$ = (2,1) and $(m, n)$ = (3,1).

Figure 4.- Shows a), c). Frequencies $f_-$ and $f_+$ normalized to the initial frequency as a function of the event number for the degenerate modes $(m, n)$ = (2,1). The solid line shows the exact value of the normalized frequency. The dashed and dot lines show the normalized frequency calculated using the mode shape before adsorption and the mode shape after adsorption, respectively. b), d). Relative frequency shift accounting for the degeneration versus not accounting for degeneration (equation (1)) for all the 300 events, when calculated with the mode shape before adsorption (empty circles) and with the mode shape after adsorption (filled circles).

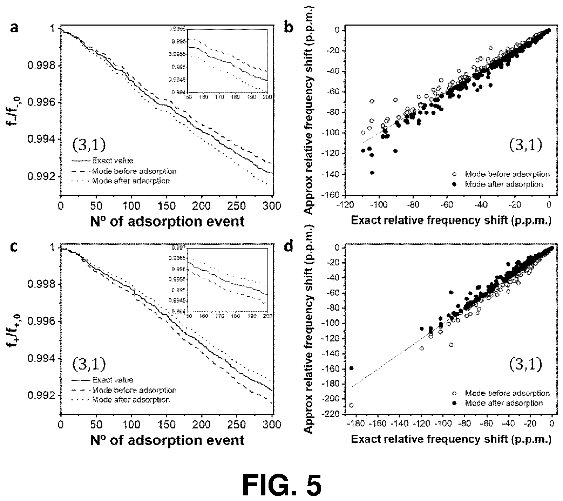

Figure 5.- Shows a), c). Frequencies $f_-$ and $f_+$ normalized to the initial frequency as a function of the event number for the degenerate modes $(m, n)$ = (3,1).. The solid line shows the exact value of the normalized frequency. The dashed and dot lines show the normalized frequency calculated using the mode shape before adsorption and the mode shape after adsorption, respectively. b), d). Relative frequency shift accounting for the degeneration versus not accounting for degeneration (equation (1)) for all the 300 events, when calculated with the mode shape before adsorption (empty circles) and with the mode shape after adsorption (filled circles).

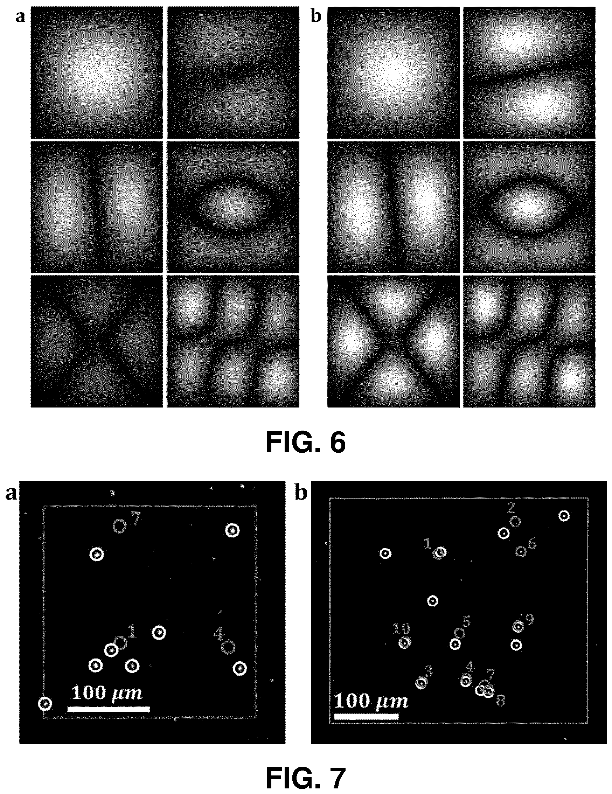

Figure 6.- Shows a) Experimental mode maps of the square resonator element used in the real experiment before deposition of bacteria with a nanomechanical mass spectrometer system, measured by DHM (Digital Holographic Microscope). b) Theoretical mode maps obtained by fitting the experimental modes to equation (18) to obtain the parameter $\theta$ for every case.

Figure 7.- Shows positions of the adsorbed particles in the square resonator element a) and in the rectangular resonator element b). The white circles represent the real positions obtained by the optical image in the background. The grey circles represent the positions calculated by the inverse problem algorithm and the numbers represent the jump in chronological order.

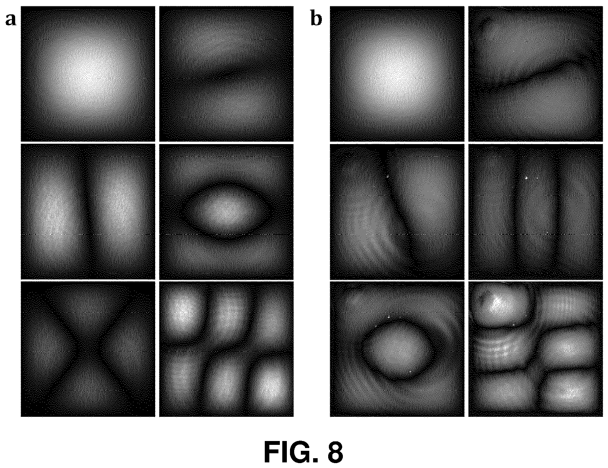

Figure 8.- Shows a) Experimental mode maps of the square resonator element used in the experiment before deposition of bacteria, measured by DHM. b) Experimental mode maps of the square resonator element after the deposition of bacteria, measured by DHM where a clear change in the mode shape can be seen.

## PREFERRED EMBODIMENT OF THE INVENTION

A preferred embodiment of the mechanical resonator with low level of symmetry is described below, with the aid of figures 1 to 8.

The mechanical resonator comprises a resonator element (1) made of an elastic material and adapted for sustaining at least one oscillation mode, and a clamping structure (2) supporting the resonator element (1). The mechanical resonator also comprises a measuring module, connected to the resonator element (1), and configures to measure one or more oscillation modes.

Additionally, the mechanical resonator meets the following conditions:

- all edges of the resonator element (1) are anchored to the clamping structure (2),
- the thickness of the resonator element (1) is much smaller than its length and width, such as a membrane,
- its mechanical symmetry is N≤2, such as an ellipse or a rectangle, and
- aspect ratio greater than $1+10*m_a/M$, preferably comprised between $1+10*m_a/M$ and 100, more preferably comprised between $1+10*m_a/M$ and 10, and even more preferably comprised between $1+10*m_a/M$ and 1.5, where $m_a$ is the mass of an analyte whose mass is to be measured and M is the mass of the resonator element (1) used to measure it.

The condition for the aspect ratio is expressed as a function of the mass of the analyte intended to be deposited on the resonator and the mass of the resonator element (1) itself. This is because the change in the shape of the degenerate vibrational modes depends on the ratio between these two quantities.

In order to give a bit of insight of the phenomenon, virtual experiments of *E.coli* bacteria adsorptions have been performed on a semi-square silicon nitride resonator element (1).

A total of 300 randomly distributed adsorptions were generated with masses following a normal distribution with mean of 500 fg and standard deviation of 100 fg that are typical values for *E.coli* bacterial cells. The width of the resonator element (1) was fixed to 250 $\mu m$ and the aspect ratio was varied from 1.0001 to 1.1585.

Figure 2 shows the values of the parameters $\theta_+$ and $\theta_-$ as the different adsorptions take place for the quasi-degenerated modes $(m, n) = (2,1)$ and $(m, n) = (3,1)$ for different aspect ratios. It can be observed that as the aspect ratio increases, the variation of the mode shape becomes smaller. However, if the aspect ratio is very close to 1, after few adsorptions, the mode shape can change dramatically from its original form.

Of course, these are random curves that depend on the adsorption positions, but they clearly show how the mode shapes can change in a single experiment with just a few adsorption events. For instance, for the case of $(m, n) = (2,1)$ and aspect ratio of 1.0004, after around 60 events, the parameter $\theta$ has decreased around 30 degrees, then it goes back to its initial value after around 60 events more, and finally takes the opposite value, increasing around 30 degrees after 150 events more.

Something similar occurs for the case of $(m, n) = (3,1)$, but in this case the change is even quicker and after around 20 events the parameter $\theta$ has decreased around 40 degrees changing the mode shape drastically. Although these curves seem to be rather random, there are certain values that can show a clear dependence on, for example, the aspect ratio of the resonator element (1).

It would be interesting to see the dependence of the absolute variation of the parameter $\theta$ as a function of the aspect ratio of the resonator element (1) in order to see at which aspect ratio it is safe to use the classical equation (1).

In this sense the averaged change of $\theta$ per event as a function of the aspect ratio has been calculated, and the result is shown in figure 3a.

It must be noted that the values shown in figure 3a are averaged values, there are adsorptions that produce bigger changes and adsorptions that produce much smaller changes. Of course, an averaged change of $\Delta\theta$ per event does not mean that after 300 events the total change will be $300\Delta\theta$, the randomness of the adsorption positions will make the value of $\theta$ fluctuate in a much narrower range.

In figure 3b the maximum change of $\theta$ produced by one adsorption event is shown. It is quite remarkable that for an aspect ratio of 1.0001 a change of almost 100 degrees was produced by just a single adsorption. In order to use equation (1) safely, we must be sure that the target mass will not produce significant changes in the mode shape.

Now, let us consider that the mode shape at every time can be measured, if we would like to approximate the relative frequency shift by equation (1) we should choose either to use the mode shape before the adsorption or after the adsorption. For either of these choices, we would be committing some error.

Figures 4 and 5 show the error committed by using equation (1) in order to calculate the relative frequency shift for the modes $(m, n) = (2,1)$ and $(m, n) = (3,1)$ respectively for an aspect ratio of 1.0001.

For some adsorptions the error is very small while for other adsorptions the error is huge, it depends on the adsorption position and on how much the parameter $\theta$ changes. Note how, if the mode shape is used before the adsorption in the approximation, the relative frequency shift is underestimated for $f_-$ while it is overestimated for $f_+$.

Of course, these values have been calculated for a resonator element (1) with an aspect ratio extremely close to 1, and as shown in figure 3, the error in the approximation of equation (1) will decrease as the aspect ratio increases, but it is clear that, in order to be precise in the calculation of the frequency, equation (17) must be used.

The mass and position of the adsorbed particle is calculated from the relative frequency shifts by means of the so-called inverse problem. The inverse problem is a probabilistic problem that is computationally quite expensive. The feasibility of the inverse problem algorithm relies on the simplicity of equation (1). If equation (17) were used instead of equation (1), the added complexity will make the inverse problem algorithm unfeasible.

Finally real experiments performed with a nanomechanical mass spectrometer system of a few adsorptions of *E.coli* bacteria on a resonator element (1) with aspect ratio very close to one and also on a resonator element (1) with aspect ratio high enough to avoid degeneration have been performed.

It has been seen how the inverse problem fails to calculate the correct positions of the particles for the square resonator element (1) while it was very efficient for the resonator element (1) with no degeneration. For both cases, the mode shapes of the membrane with a DHM microscope have been measured before starting the experiments and those modes were used later to obtain the positions of the particles using the inverse problem algorithm with equation (1).

In figure 6, we can see the experimental modes and the theoretical ones after fitting to equation (19) to obtain the parameter $\theta$ in each case, for the square resonator element (1) case. Notice that the modes of the square resonator element (1) differ significantly from the modes of a high aspect ratio resonator element (1), where the modes show no degeneration. Figure 6a shows the vibrational modes tracked in the experiment, from top to down and from left to right, we show the first, second, third, fifth, sixth and eighth modes.

Notice that our analytical model fits the mode maps perfectly (Figure 6b) and allows to precisely obtain the parameter $\theta$ of the equation (19).

In figure 7, it can be seen the real positions of the particles measured by means of an optical microscope in dark field mode (white circles) and the positions calculated by the inverse problem (red circles).

For the case of the square resonator element (1) (Figure 7a), a total of 8 jumps where detected. Although 6 modes have been tracked simultaneously, for some of the jumps, the last mode was lost by the PLL (Phase-locked loop system) and therefore, for these jumps, only 5 modes were used in the inverse problem calculation.

This is actually another drawback of using resonator element (1) with quasi-degenerated modes, the peaks of the quasi-degenerated modes are too close and sometimes it is difficult to track them correctly. Only three of the 8 jumps gave a solution in the inverse problem and only the first one gave an accurate position. This is because we were using the mode shapes measured before the experiment, and probably after the first adsorption they changed enough so that the inverse problem gave no solution or inaccurate solutions for the rest of the particles.

Indeed, in figure 8 it can be seen how the mode shapes changed after the experiment. This figure shows the experimental mode maps measured before the deposition of bacteria (Figure 8a) and after the deposition (Figure 8b). It is clearly seen that the quasi-degenerated modes change upon the deposition of *E. coli* bacteria. The bacteria induce changes in the parameter $\theta$ of equation (19), sometimes large enough changes to change the sorting of the modes by resonance frequency. All these changes hinder the calculation of the correct landing position of the bacteria, and so the determination of the mass of these analytes.

On the other hand, for the rectangular resonator element (1) (Figure 7b), a total of 12 jumps were detected during the experiment and 10 of them were successfully calculated by the inverse problem. In this experiment two of the jumps occurred almost simultaneously and therefore the position of these two particles could not be calculated by the inverse problem because the time resolution was not high enough. The improvement obtained using a rectangular resonator element (1) in the percentage of successfully particles calculated by the inverse problem and also in the accuracy of the position calculated is evident, proving the concept of the invention.

## Claims

1. A mechanical resonator, for the measurement of the mechanical properties of individual particles, that comprises:

   - a resonator element (1), with short characteristic dimension (4) and long characteristic dimension (3), made of an elastic material and adapted for sustaining at least one oscillation mode, and
   - a clamping structure (2) supporting the resonator element (1),

   wherein the resonator element (1) meets the following conditions:

   - all its edges (3, 4) are anchored to the clamping structure (2),
   - its thickness is less than or equal to 0.1 times the length of the shorter characteristic dimension (4) of the resonator element (1),
   - its mechanical symmetry is N≤2, and
   - its aspect ratio is greater than $1+10*m_a/M$, where $m_a$ is the mass of a particle whose mass is to be measured and M is the mass of the resonator element (1).

2. The mechanical resonator of claim 1, wherein the aspect ratio of the resonator element (1) is comprised between $1+10*m_a/M$ and 100.

3. The mechanical resonator of claim 1, wherein the aspect ratio of the resonator element (1) is comprised between $1+10*m_a/M$ and 10.

4. The mechanical resonator of claim 1, wherein the aspect ratio of the resonator element (1) is comprised between $1+10*m_a/M$ and 1.5.

5. The mechanical resonator of claim 1, wherein it additionally comprises a measuring module connected to the resonator element (1) and configured to measure one or more oscillation modes.

6. The mechanical resonator of claim 1, wherein the resonator element (1) has any shape with symmetry N≤2.

**FIG. 1**

**FIG. 2**

**FIG. 3**

**FIG. 4**

**FIG. 5**

**FIG. 6**

**FIG. 7**

FIG. 8

Europäisches
Patentamt

European
Patent Office

Office européen
des brevets

# EUROPEAN SEARCH REPORT

Application Number

EP 22 38 2080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAYANDEHPEYMAN JAVAD ET AL: "Detection of SARS-CoV-2 Using Antibody-Antigen Interactions with Graphene-Based Nanomechanical Resonator Sensors", ACS APPLIED NANO MATERIALS, vol. 4, no. 6, 1 June 2021 (2021-06-01), pages 6189-6200, XP055933343, ISSN: 2574-0970, DOI: 10.1021/acsanm.1c00983 * the whole document * | 1-6 | INV. G01N29/02 G01N29/036 |
| X | NGUYEN DANH-TRUONG ET AL: "Atomistic simulation of free transverse vibration of graphene, hexagonal SiC, and BN nanosheets", ACTA MECHANICA SINICA, SPRINGER BERLIN HEIDELBERG, BERLIN/HEIDELBERG, vol. 33, no. 1, 11 November 2016 (2016-11-11), pages 132-147, XP036146430, ISSN: 0567-7718, DOI: 10.1007/S10409-016-0613-Z [retrieved on 2016-11-11] * the whole document * | 1-6 | |
| X | SAKHAEE-POUR A ET AL: "Vibrational analysis of single-layered graphene sheets", NANOTECHNOLOGY, INSTITUTE OF PHYSICS PUBLISHING, BRISTOL, GB, vol. 19, no. 8, 27 February 2008 (2008-02-27), page 85702, XP020129858, ISSN: 0957-4484 * the whole document * | 1-6 | |

TECHNICAL FIELDS
SEARCHED (IPC)

G01N

The present search report has been drawn up for all claims

| Place of search | Date of completion of the search | Examiner |
|---|---|---|
| Munich | 23 June 2022 | Rouault, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)